Europäisches Patentamt

European Patent Office

Office européen des brevets

(11) Publication number: **0 359 412**
**A2**

# EUROPEAN PATENT APPLICATION

(21) Application number: 89308388.1

(22) Date of filing: 18.08.89

(51) Int. Cl.5: **B01J 23/14 , B01D 53/26**

(30) Priority: 18.08.88 GB 8819694

(43) Date of publication of application:
21.03.90 Bulletin 90/12

(34) Designated Contracting States:
AT BE CH DE ES FR GB GR IT LI LU NL SE

(71) Applicant: TI Corporate Services Limited
50 Curzon Street
London W1Y 7PN(GB)

(72) Inventor: Harris, Peter John Frederick
6 Edington Place, Grove, Wantage
Oxforshire OX12 OBX(GB)
Inventor: Peters, Brian Frederick George
35 Audley Road,
Saffron Walden, Essex CB11 3HN(GB)

(74) Representative: Lambert, Hugh Richmond et
al
D. YOUNG & CO. 10 Staple Inn
London, WC1V 7RD(GB)

(54) Vehicle exhaust gas catalysts.

(57) Vehicle exhaust gas catalyst compositions comprising a calcined mixture of tin(IV) oxide and either or both of manganese dioxide ($MnO_2$) and cobalt oxide ($Co_3O_4$).

EP 0 359 412 A2

Xerox Copy Centre

## VEHICLE EXHAUST GAS CATALYSTS

This invention relates to catalyst compositions for use primarily as vehicle exhaust gas catalysts, to control the emissions of noxious gases, particularly carbon monoxide, unburnt hydrocarbons and/or nitrogen oxides, but also having utility in other fields where similar emission control is necessary.

Catalytic converters currently in use in motor vehicles to control exhaust gas emissions generally comprise one or more platinum group metals, eg platinum, palladium, rhodium or rhenium, alone or in combination, and thus tend to be expensive. The most commonly used catalytic material is platinum on alumina. Much research has been carried out to find a less expensive alternative, and one system that has received considerable attention is the $SnO_2$-$Cr_2O_3$ system For example, in a series of papers:

J. Catal. 41, 202 (1976);

J. Chem. Soc. Chem. Commun. 509-510 (1974);

Preparation of Catalysts, Ed. B. Delmon et al, Elsevier Scientific Publishing Company, 197-206 (1976);

J. Catal. 54, 42-51 (1978);

F. Solymosi et al have reported that $SnO_2$ doped with a small amount (0.1-1 mole%) of $Cr_2O_3$ is a very active catalyst for the adsorption and reduction of nitric oxide (NO) at low temperatures (150-400°C) in the presence of a reducing gas such as CO, $H_2$ or $C_2H_4$. The catalyst is prepared by reacting $HNO_3$ with metallic tin to produce $SnO_2$ which is recovered, dried at 120°C and further heated at 350°C for 3 hours and 500°C for a further five hours. The $SnO_2$ is then suspended in water and $Cr_2O_3$ added to the suspension with continuous stirring over a long period until a homogenous dispersion is obtained. The suspension is then dried, heated at 350°C for 5 hours and finally calcined in air at 900°C for 5 hours. As a result an $SnO_2$ catalyst is obtained having higher valency chromium ions (average valency 3.85) stabilised in the surface layer.

$SnO_2$-$Cr_2O_3$ catalysts are also reported to be effective catalysts for the catalytic oxidation of CO in gaseous mixtures containing $SO_2$ (USSR Patent No. 736,997); catalytic removal of $SO_2$ (USSR Patent No. 691,185); catalytic reduction of nitrogen oxides in the presence of $NH_3$ (Japanese published patent application No. 75-108169); and as alkylation catalysts in the alkylation of phenols (US Patent No. 4,208,537). In USSR Patent 736,997 such $SnO_2$-$Cr_2O_3$ catalysts are prepared by heating $SnCl_2$ and $CrO_3$ in relative proportions to give $SnO_2$:$Cr_2O_3$ mole% ratios of from 1:99 to 99:1. In Japanese published patent application 75-108169, the $SnO_2$-$Cr_2O_3$ catalysts are prepared by coprecipitation from an aqueous solution containing concentrated HCl, $CrO_3$ and $SnCl_2 \cdot 2H_2O$ by addition of $NH_4OH$. The mixed oxide precipitated was recovered, slurried in water, coated onto an alumina support, dried and calcined. In US Patent 4,208,537, the $SnO_2$-$Cr_2O_3$ containing alkylation catalysts are prepared by coprecipitation, or kneading preformed $SnO_2$ and $Cr_2O_3$-containing gels to form an oxide mixture and calcining, optionally after coating onto a suitable, e.g. alumina, support.

More recently it has been found (International Patent Publication No. WO 88/00859) that catalyst compositions having high levels of catalytic activity in the oxidation of CO and unburnt hydrocarbons, and in the catalytic reduction of nitrogen oxides, equivalent in many cases to those of precious metal catalysts and therefore potentially useful as vehicle exhaust gas catalysts for the control of noxious emissions, are obtained by impregnating tin(IV) oxide ($SnO_2$) with chromium(VI) oxide ($CrO_3$) and calcining the resulting product. For convenience the catalyst may be regarded as a mixed $SnO_2$:$CrO_3$ catalyst. In such catalysts the tin:chromium weight ratio (calculated as $SnO_2$:$CrO_3$) may be in the range 1:99 to 99:1, but is preferably in the range 2.3:1 to 9:1, most preferably 3:2 to 3:1.

The $SnO_2$:$CrO_3$ catalyst composition is preferably obtained by impregnating tin(IV) oxide, preferably uniformly dispersed on a high surface area ceramic support such as cordierite, and deposited thereon by the solgel process described by the United Kingdom Atomic Energy Authority in their UK Patent GB 2,134,004 B, with aqueous chromic acid, drying and calcining the resulting product. At an $SnO_2$:$CrO_3$ weight ratio of 70:30 such a catalyst gives substantially complete CO and hydrocarbon conversions at temperatures in the range 200 to 300°C, and substantially complete NO reduction at the same temperature.

Further research into the catalytic activity of tin(IV) oxide has now revealed two further metal oxide combinations having significant activity in the catalytic oxidation of unburnt hydrocarbons and carbon monoxide in vehicle exhaust gas emissions, and in the catalytic reduction of nitrogen oxides. The metal oxide combinations provided in accordance with this invention therefore show potential applicability as 2- and 3-way catalyst compositions for the catalytic oxidation of unburnt hydrocarbons and carbon monoxide, and/or the catalytic redution of nitrogen oxides in vehicle exhaust gas emissions, and in the catalytic treatment of other gas streams containing one or more of unburnt hydrocarbons, carbon monoxide and oxides of nitrogen, particularly nitric oxide NO, to reduce the content of such noxious components, especially as a means of pollution control before the venting of such gases to the atmosphere.

The invention also relates to catalytic converters for vehicle exhaust gas emission systems comprising as the active catalytic ingredient a catalyst composition according to this invention.

In accordance with this invention it has been found that mixed oxide compositions comprising tin(IV) oxide $SnO_2$ and either or both of a cobalt oxide, preferably $Co_3O_4$, and manganese(IV) oxide, $MnO_2$, have significant catalytic activity towards vehicle exhaust gas emissions and other gas streams containing significant amounts of unburnt hydrocarbon, carbon monoxide and/or nitrogen oxides and in reducing the content of such noxious components by the catalytic oxidation of the unburnt hydrocarbons and carbon monoxides, and the catalytic reduction of the nitrogen oxides.

In the mixed oxide catalyst compositions of this invention the weight ratio of $SnO_2$ to $MnO_2$ and/or the cobalt oxide may range from 99:1 to 1:99, but the preferred ratios are in the range 99:1 to 50:50, more especially in the range 95:5 to 65:35. Whilst it will be apparent from the data hereinafter presented that the optimum proportions vary whether one is looking at the $SnO_2$ $MnO_2$ combination or the $SnO_2$/cobalt oxide combination, and whether one is looking at the oxidation of unburnt hydrocarbon (propane) or carbon monoxide, for a balance of properties the optimum ratios for the $SnO_2$/$MnO_2$ combination would appear to be ratios in the range 80:20 to 62:38, and for the $SnO_2$/cobalt oxide combination, in the range 77:23 to 62:38.

The mixed oxide catalyst compositions of this invention may be prepared by a variety of methods such as coprecipitation of the mixed oxides from a co-solution of suitable $SnO_2$ and $MnO_2$ or cobalt oxide, preferably cobaltous cobaltic oxide $Co_3O_4$, precursors, impregnation of a preformed oxide, usually the tin-(IV) oxide, by a suspension of the other oxide(s) or more usually by an aqueous solution of a suitable manganese or cobalt salt precursor for the metal oxide, followed by drying and calcination.

Usually the catalyst composition of this invention will be dispersed on a high surface area catalyst support material, such as alumina, although a wide variety of other high surface area catalyst support materials are available, e.g. zeolites and other molecular sieves, and which may also be used as catalyst support materials in this invention. Other suitable support materials include silica, magnesia and titania. Particularly preferred support materials are those comprising an alumina, or other refractory metal oxide coating on a monolithic ceramic or metal base. Such catalyst support materials are known and are commercially available, e.g. under the Trade name Cordierite.

Various techniques are available for dispersing the tin(IV) oxide and the manganese or cobalt oxide on the support. A convenient and currently preferred technique is to impregnate the support with an aqueous $SnO_2$ sol followed by drying the impregnated support to deposit the tin(IV) oxide thereon. The tin(IV) oxide-containing support is then impregnated with an aqueous manganese or cobalt salt solution e.g. manganese or cobalt(II) nitrate, $Mn(NO_3)_2 \cdot H_2O$ or $Co(NO_3)_2$ and the reimpregnated support redried and calcined to deposit the manganese(IV) or cobalt oxide $Co_3O_4$.

In an alternative procedure, the tin(IV) oxide is formed in situ by impregnating the support with $SnCl_4$ and then washing the impregnated support first with water to form an unstable hydrated tin(IV) oxide precipitate, $SnO_2 \cdot H_2O \cdot Cl^-$ and subsequently with aqueous ammonia to form a stable, hydrated oxide precipitate $SnO_2 \cdot H_2O$. The support is then washed with water to remove chloride ion, and thereafter impregnated with aqueous manganese or cobalt nitrate solution, redried and calcined to deposit the manganese(IV) or cobalt oxide.

In some circumstances, depending on the end use of the catalyst composition, the catalyst composition of this invention may simply comprise granules or pellets of tin oxide which have been impregnated with $MnO_2$ or the cobalt oxide, for example, by impregnation with manganese or cobalt nitrate solution, dried and calcined.

Where the catalyst composition is deposited on a high surface area support, i.e. catalyst supports with a total surface area in the range 1.5 $m^2/dm^3$ to 2.5 $m^2/dm^3$, typically around 2 $m^2/dm^3$, catalyst loadings, i.e. calculated as total tin(IV) oxide/manganese(IV) or cobalt oxide, may be anything from 1 to 500 $g/m^2$, depending on the activity of the particular catalytic composition, but more usually loadings are expected to be in the range 50 to 150 $g/m^2$, preferably around 100 $g/m^2$.

The catalyst compositions of this invention show optimum catalytic activity for the oxidation of carbon monoxide and hydrocarbons and the catalytic reduction of nitrogen oxides at temperatures above about 140°C, and up to 1100°C, and are generally operable with satisfactory results at temperatures in the range 140 to 400°C. Thus in comparison with the $SnO_2$/$CrO_3$ combinations disclosed in WO 88/00859, which have optimum activity above about 300°C, the present compositions are catalytically operable at somewhat lower temperatures.

Although the presently preferred catalyst compositions of this invention consist essentially of a calcined mixture of tin(IV) oxide and manganese(IV) and/or cobaltous cobaltic oxide $Co_3O_4$, the addition to or

3

presence of other catalytically active metal oxides, particularly transition metal oxides in the calcined mixture, is not to be excluded. For example, further catalytically active meal oxides may be incorporated into the catalyst composition selected from ceric oxide $CeO_2$, aluminium oxide $Al_2O_3$, ferric oxide $Fe_2O_3$, vanadium pentoxide $V_2O_5$, chromium(III) oxide $Cr_2O_3$, chromium(VI) oxide $CrO_3$ and copper(II) oxide $CuO$. Particularly preferred additions are $CeO_2$ and/or $Al_2O_3$.

The additional oxide or oxides may be incorporated into the catalyst composition in a similar manner, that is to say by impregnating the support (or the $SnO_2$ where no support is used) with a precursor material convertible to the desired oxide upon calcination, and preferably a water-soluble precursor which is incorporated into the support (or directly into the $SnO_2$) by impregnating with an aqueous solution of the precursor material followed by drying and calcining. Most desirably and wherever possible the additional oxide(s) are incorporated into the support (or directly into the $SnO_2$) by a sol-gel process, i.e. by impregnating the support (or the $SnO_2$) with a suitable oxide sol, followed by drying and calcining. In general, the oxides may be incorporated into the support in any order. As before, the preferred supports are high surface area supports such as alumina, silica, titania, etc., most preferably monolithic ceramic supports such as cordierite.

The amounts of the additional oxide(s) may range from 0.5 to 50% by weight, based on the combined weights of $SnO_2$ and $MnO_2$ or cobalt oxide: more probably, individual amounts of the addditional oxide(s) may range from 1 to 40%, most probably in the range 10 to 30%, based on the combined weight of $SnO_2$ and $MnO_2$ or cobalt oxide.

Also provided in accordance with this invention are catalytic converters for the control of vehicle exhaust gas emissions and comprising a mixed non-precious metal oxide catalyst composition as above described, preferably in supported form.

In conclusion, it should perhaps be pointed out that the references herein to "mixed oxides" or "mixed oxide compositions" refer not only to physical mixtures of the specified oxides, but also, and in fact usually, to the specified oxides in chemical combination one with the other to provide a metal oxide composition regardable as a combination or mixture of the specified oxides.

The preparation and activity of mixed oxide catalyst compositions in accordance with this invention, in powder and in supported form, are illustrated by the following Examples.

## EXAMPLE 1

### Preparation of Tin(IV) Oxide/Manganese(IV) Oxide Powder (79:21)

10 mls of an aqueous sol containing 370 g $SnO_2$ per litre were pipetted into a petri dish. Into this was pipetted 6.24 ml of a BDH $Mn(NO_3)_2 \cdot 6H_2O$ solution (49/51 w/w) equivalent to an added amount of 0.95 g $MnO_2$. The resulting precipitate was thoroughly mixed in the supernatant liquor and then dried in an oven for 2 hours at 100°C. The dry powder was lightly ground by hand and calcined at 600°C for a further 2 hours. The resulting mixed oxide composition has a $SnO_2$:$MnO_2$ weight ratio of 79:21.

Following the same procedure additional samples were prepared having the following $SnO_2$:$MnO_2$ ratios:

91:9
80:20
77:23
71:29
62:38
50:50

Samples of the unsupported mixed oxide compositions were tested for their catalytic oxidation activity with respect to hydrocarbon (propane) and carbon monoxide by passing prepared standard gaseous mixtures containing either CO (0.45 vol%) $O_2$ (20 vol%) balance $N_2$, or $nC_3H_8$ (0.23 vol%) $O_2$ (20 vol%) balance $N_2$, over the heated catalyst compositions under controlled conditions at flow rates of 0.52 L/min for the CO oxidation test and 0.13 L/min for the $nC_3H_8$ oxidation test. CO contents of the treated gas streams were measured by infra red analysis, and hydrocarbon content by a flame ionisation detector (FID).

Two measurements were made on each sample to determine the specific catalytic activity of the sample at a given temperature, i.e. the moles of CO or $nC_3H_8$ converted per gram of catalyst per hour, and the temperature ($T_{100}$) required respectively for the complete removal of CO or $nC_3H_8$ from the gas stream.

4

For the former test 0.1 g samples were used, for the latter 0.5 g.
The results are presented in Tables 1 to 4.

TABLE 1

| $MnO_2$:$SnO_2$ Powders (Fired 600° C) | |
| --- | --- |
| $T_{100}$ Values for CO Oxidation (0.5 g Samples) | |
| $MnO_2$:$SnO_2$ Ratio | Temperature to Remove CO Completely, $T_{100}$ |
| 9:91 | 200° |
| 20:80 | 140° |
| 23:77 | 155° |
| 29:71 | 145° |
| 38:62 | 160° |

TABLE 2

| $MnO_2$:$SnO_2$ Powders | |
| --- | --- |
| Specific Activities for CO Oxidation at 300° C | |
| (Determined using 0.01 g Samples) | |
| $MnO_2$:$SnO_2$ Ratio | Activity (Moles Converted per g Catalyst per hour) |
| 9:91 | 0.24 |
| 20:80 | 0.34 |
| 23:77 | 0.40 |
| 29:71 | 0.33 |
| 38:62 | 0.35 |
| 50:50 | 0.37 |

TABLE 3

| $MnO_2$:$SnO_2$ Powders | |
| --- | --- |
| $T_{100}$ Values for Propane Oxidation (0.5 g Samples) | |
| $MnO_2$:$SnO_2$ Ratio | Temperature to Remove Propane Completely, $T_{100}$ |
| 9:91 | 360° |
| 20:80 | 280° |
| 23:77 | 290° |
| 29:71 | 290° |
| 38:62 | 290° |
| 50:50 | 355° |

TABLE 4

| MnO$_2$:SnO$_2$ Powders | |
| --- | --- |
| Specific Activities for Propane at 300°C | |
| MnO$_2$:SnO$_2$ Ratio | Activity (Moles Converted per g Catalyst per hour) |
| 9:91 | 0.0021 |
| 20:80 | 0.0051 |
| 23:77 | 0.0048 |
| 29:71 | 0.0033 |
| 38:62 | 0.0042 |
| 50:50 | 0.0047 |

EXAMPLE 2

Preparation of Tin(IV) Oxide/Cobalt(III) Oxide Powder (96:4)

10 mls of a tin oxide sol containing 0.370 g SnO$_2$ per ml were pipetted into a petri dish. Into this was pipetted 7.53 ml cobaltous nitrate solution containing 1.51 g Co(NO$_3$)$_2$. A precipitate was found and this thoroughly stirred into the remaining liquid. The dish was put in an oven for 2 hours at 100°C to dry off the residue. When the powder had dried off it was lightly ground up in a pestle and mortar and put in an alumina crucible and fired at 600°C for 2 hours.

Following the above procedure further samples were prepared having the following SnO$_2$:Co$_3$O$_4$ ratios:

91:9
77:23
75:25
71:29
62:38
50:50

The specific activities and T$_{100}$ values of the SnO$_2$:Co$_3$O$_4$ samples inthe oxidation of carbon monoxide and nC$_3$H$_8$ oxidation were determined by the procedures described in Example 1. The results are presented in Tables 5 to 8.

TABLE 5

| Co$_3$O$_4$:SnO$_2$ Powders (Fired 600°C) | |
| --- | --- |
| T$_{100}$ Values for CO Oxidation (0.5 g Samples) | |
| Co$_3$O$_4$:SnO$_2$ Ratio | Temperature to Remove CO Completely, T$_{100}$ |
| 9:91 | 195° |
| 23:77 | 180° |
| 25:75 | 160° |
| 29:71 | 190° |
| 38:62 | 170° |
| 50:50 | 180° |

TABLE 6

| $Co_3O_4:SnO_2$ Powders | |
| --- | --- |
| Specific Activities for CO Oxidation at 300° C | |
| (0.01 g Samples) | |
| $Co_3O_4:SnO_2$ Ratio | Activity (Moles Converted per g Catalyst per hour) |
| 9:91 | 0.21 |
| 23:77 | 0.67 |
| 25:75 | 0.68 |
| 29:71 | 0.57 |
| 38:62 | 0.57 |
| 50:50 | 0.40 |

TABLE 7

| $Co_3O_4:SnO_2$ Powders | |
| --- | --- |
| $T_{100}$ Values for Propane Oxidation (0.5 g Samples) | |
| $Co_3O_4:SnO_2$ Ratio | Temperature to Remove Propane Completely, $T_{100}$ |
| 9:91 | 450° |
| 23:77 | 400° |
| 25:75 | 300° |
| 29:71 | 320° |
| 38:62 | 350° |
| 50:50 | 405° |

TABLE 8

| $Co_3O_4:SnO_2$ Powders | |
| --- | --- |
| Specific Activities for Propane at 300° C | |
| $Co_3O_4:SnO_2$ Ratio | Activity (Moles Converted per g Catalyst per hour) |
| 9:91 | 0.0009 |
| 23:77 | 0.0029 |
| 25:75 | 0.0028 |
| 29:71 | 0.0036 |
| 38:62 | 0.0038 |
| 50:50 | 0.0007 |

The tests results from Examples 1 and 2 are illustrated graphically in the accompanying drawings, in which:

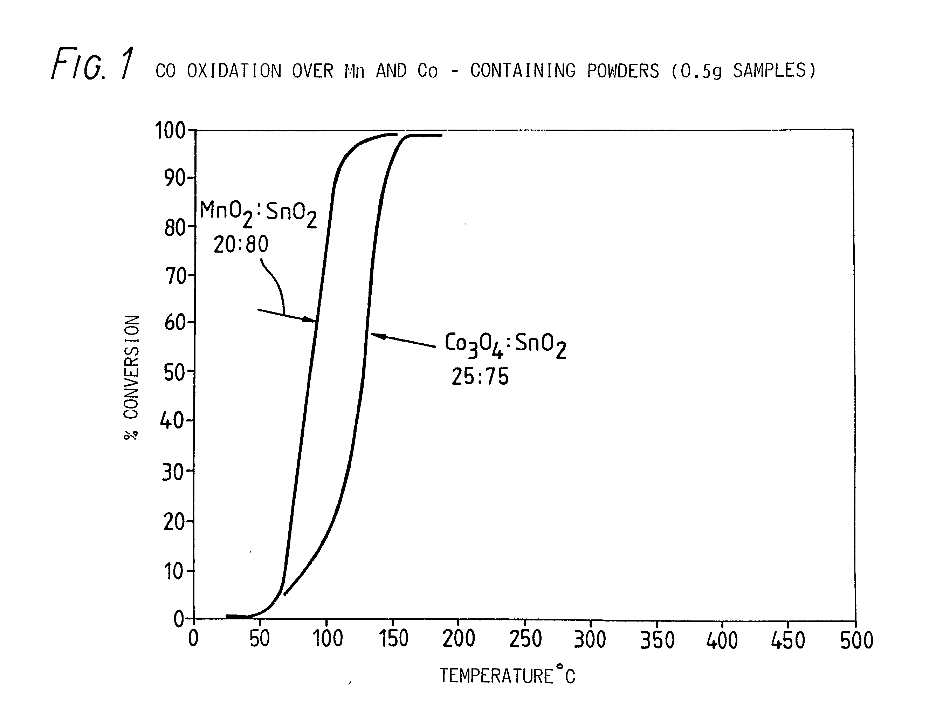

Figure 1 shows the CO conversion obtained using 0.5g samples of (a) a powdered mixed oxide composition containing tin(IV) oxide and manganese oxide at a weight ratio of 80:20, and (b) a powdered mixed oxide composition containing tin(IV) oxide and cobaltous cobaltic oxide $Co_3O_4$ at a weight ratio of 75:25; and

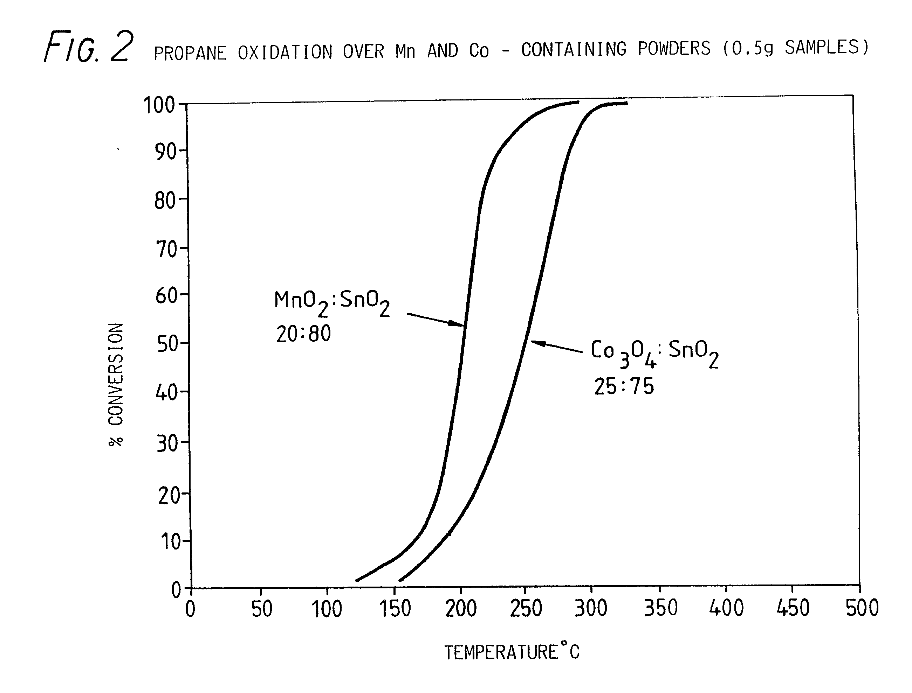

Figure 2 shows the propane conversion obtained using the same two catalyst powders.

## EXAMPLE 3

Preparation of a Supported Tin(IV) Oxide/Manganese(IV) Oxide Catalyst

A standard Cordierite (aluminium coated ceramic) micromonolith 38 mm long by 8 mm diameter was immersed in 6.4 ml of an aqueous tin(IV) oxide sol containing 370 g/L of $SnO_2$ diluted to 100 ml with methanol. After shaking for 60 seconds the impregnated monolith was dried in an air blast from an air line, and air dried at room temperature for a further 20 minutes. The dry monolith was then immersed with shaking for 60 seconds in 2.61 ml of a BDH (49/51 w/w) aqueous manganese nitrate, $Mn(NO_3)_2 \cdot 6H_2O$ solution diluted to 50 ml with methanol. The micromonolith was then blown dry with an air line a second time and further air dried at room temperature for 20 minutes. The micromonolith was then fired at $400°C$ for 15 minutes. The whole process of immersion, drying, reimmersion, redrying and firing was repeated a total of 7 times, the final calcination being carried out at $600°C$ for 2 hours.

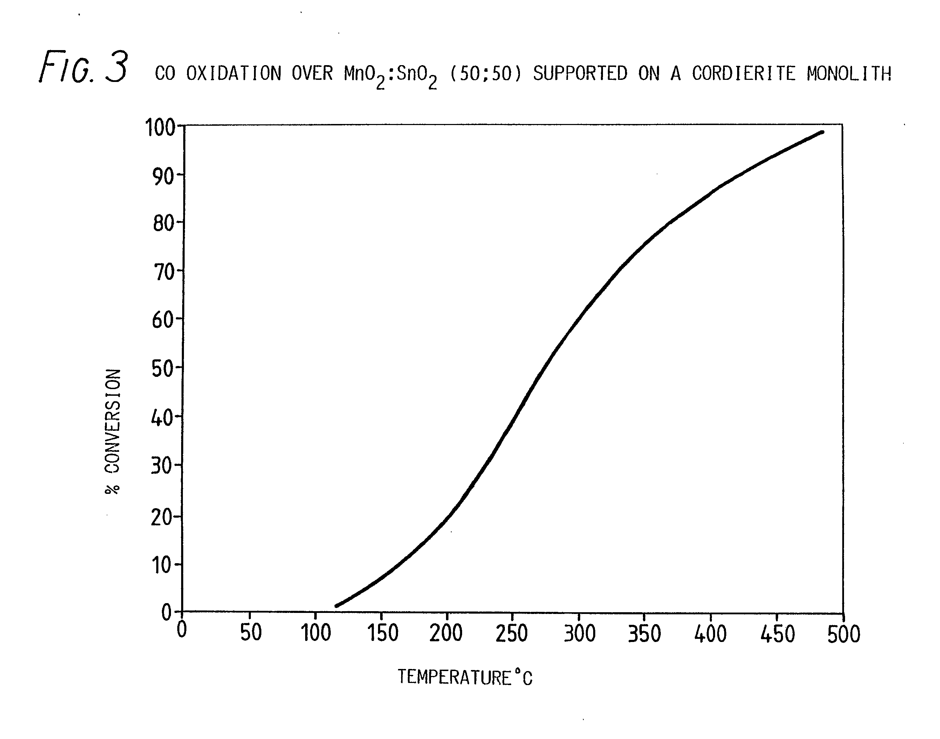

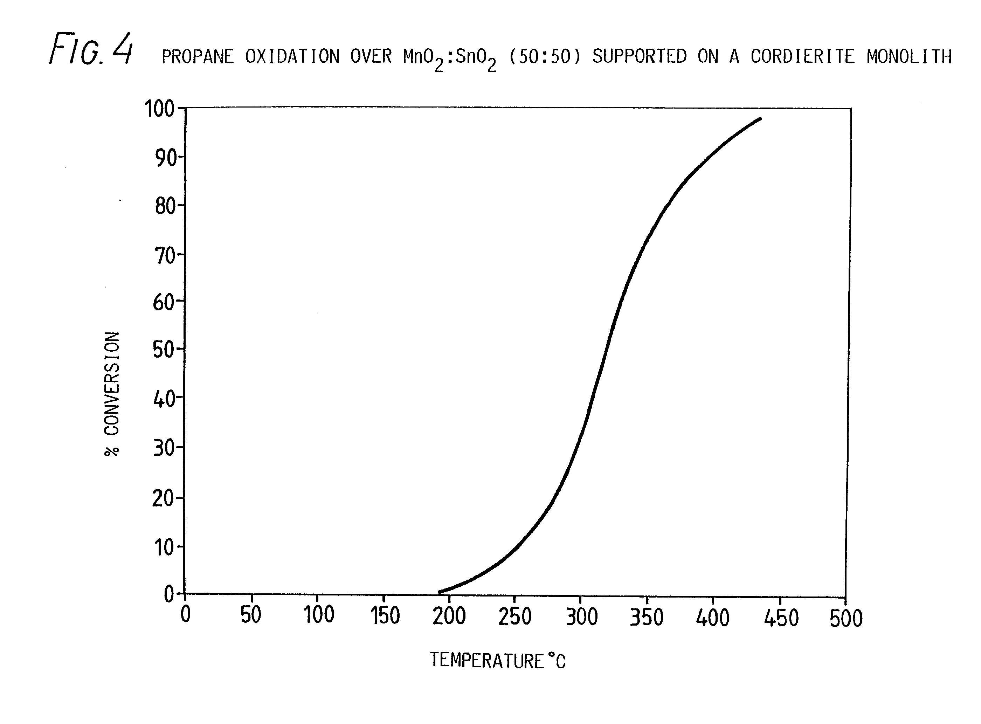

The catalytic oxidation activity of the calcined tin(IV) manganese(IV) oxide impregnated micromonolith, estimated $SnO_2:MnO_2$ ratio 50:50, towards carbon oxide and hydrocarbons $nC_3H_8$ was tested using the standard procedures outlined in Example 1. The results obtained are illustrated by the graphs shown in Figures 3 and 4 of the accompanying drawings in which:

Figure 3 shows the CO conversion rates obtained; and

Figure 4 shows the propane conversion rates obtained.

Both show substantially complete oxidation of CO and unburnt hydrocarbon, propane at temperatures in the range 400 to $500°C$.

## EXAMPLE 4

Preparation of a Supported Tin(IV) Oxide/Cobaltous Cobaltic Oxide $Co_3O_4$ Catalyst

Following the same general procedure of Example 3, a $SnO_2/Co_3O_4$-containing monolith was prepared as follows:

A standard Cordierite (aluminium coated ceramic) micromonolith 38 mm long by 8 mm diameter was immersed in 6.4 ml of an aqueous tin(IV) oxide sol containing 370 g/L of $SnO_2$ diluted to 100 ml with methanol. After shaking for 60 seconds the impregnated monolith was dried in an air blast from an air line, and air dried at room temperature for a further 20 minutes. The dry monolith was then immersed with shaking for 60 seconds in an aqueous cobaltous nitrate, $Co(NO_3)_2$, solution. The micromonolith was then blown dry with an air line a second time and further air dried at room temperature for 20 minutes. The micromonolith was then fired at $400°C$ for 15 minutes. The whole process of immersion, drying, reimmersion, redrying and firing was repeated a total of 7 times, the final calcination being carried out at $600°C$ for 2 hours.

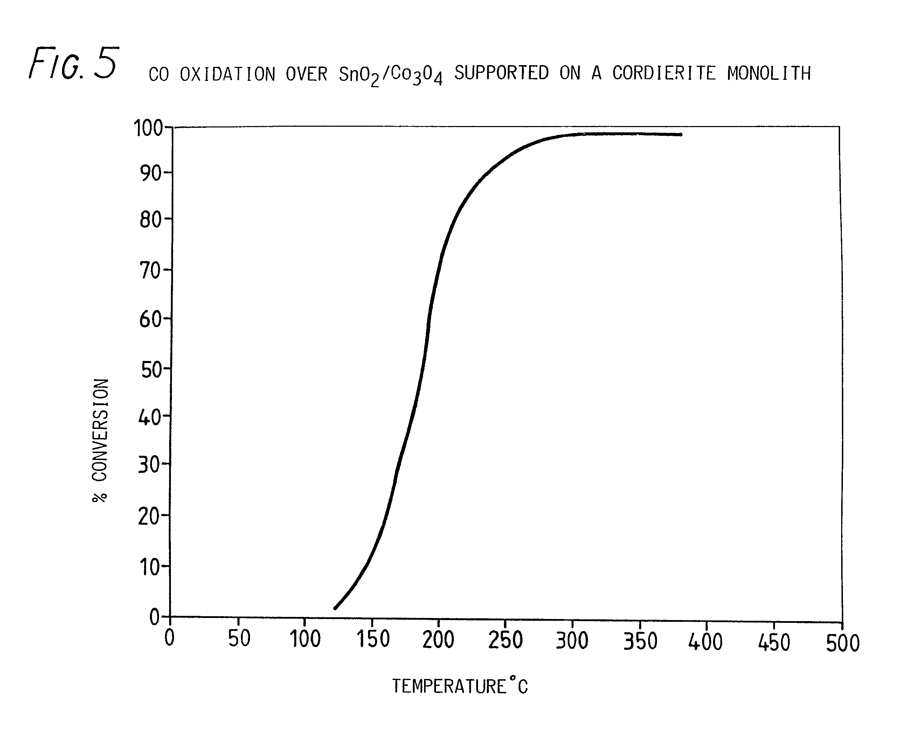

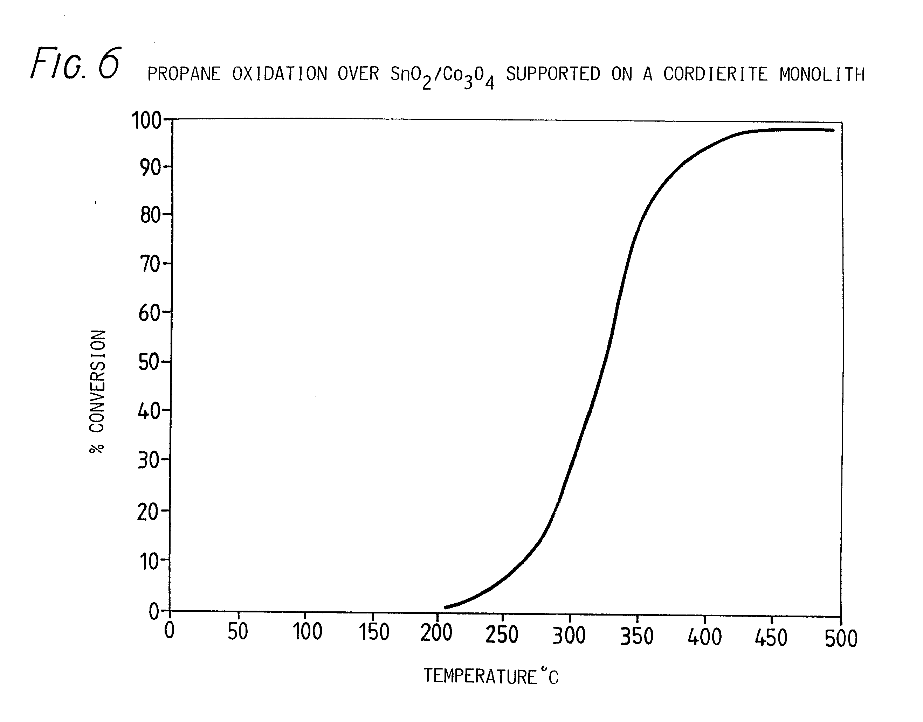

The catalytic oxidation activity of the resulting $SnO_2/Co_3O_4$ impregnated monolith, $SnO_2:Co_3O_4$ ratio approximately 50:50, towards carbon monoxide and hydrocarbons was tested using the standard procedures outlined in Example 1. The results obtained are illustrated by the graphs shown in Figures 5 and 6 of the accompanying drawings, in which:

Figure 5 shows the CO conversion rates obtained; and

Figure 6 shows the propane conversion rates obtained.

These show that substantially 100% conversion is obtained at $300°C$ for CO conversion, and at $450°C$ for propane conversion.

8

**Claims**

1. A catalytic converter for vehicle exhaust gas systems comprising as the catalytic component a non-precious metal, mixed oxide catalyst composition comprising a calcined mixture of tin(IV) oxide ($SnO_2$) and either or both of manganese(IV) oxide ($MnO_2$) and an oxide of cobalt, said calcined mixture containing $SnO_2$ and $MnO_2$ and or cobalt oxide in a weight ratio of from 99:1 to 1:99.

2. A catalytic converter according to claim 1, wherein said ratio is from 99:1 to 50:50.

3. A catalytic converter according to claim 1, wherein said ratio is from 95:5 to 65:35.

4. A catalytic converter according to claim 1, comprising a calcined mixture of tin(IV) oxide and manganese(IV) oxide in a weight ratio of from 80:20 to 62:38.

5. A catalytic converter according to claim 1, comprising a calcined mixture of tin(IV) oxide and a cobalt oxide in a weight ratio of from 77:23 to 62:38.

6. A catalytic converter according to any one of claims 1, 2, 3 or 5, wherein the cobalt oxide is cobaltous cobaltic oxide $Co_3O_4$.

7. A catalytic converter according to any one of the preceding claims, wherein the catalyst component is supported upon a high surface area refractory catalyst support.

8. A catalytic converter according to claim 7, wherein the catalyst support is a ceramic monolith.

FIG. 1 CO OXIDATION OVER Mn AND Co - CONTAINING POWDERS (0.5g SAMPLES)

MnO$_2$:SnO$_2$
20:80

Co$_3$O$_4$:SnO$_2$
25:75

% CONVERSION

TEMPERATURE °C

Neu eingereicht / Newly filed
Nouvellement déposé

EP 0 359 412 A2

*FIG. 2*  PROPANE OXIDATION OVER Mn AND Co – CONTAINING POWDERS (0.5g SAMPLES)

MnO$_2$:SnO$_2$
20:80

Co$_3$O$_4$:SnO$_2$
25:75

% CONVERSION

TEMPERATURE°C

EP 0 359 412 A2

Neu eingereicht / Newly filed
Nouvellement déposé

Neu eingereicht / Newly filed
Nouvellement déposé

FIG. 3 CO OXIDATION OVER $MnO_2:SnO_2$ (50:50) SUPPORTED ON A CORDIERITE MONOLITH

FIG.4  PROPANE OXIDATION OVER $MnO_2$:$SnO_2$ (50:50) SUPPORTED ON A CORDIERITE MONOLITH

Neu eingereicht / Newly filed
Nouvellement déposé

EP 0 359 412 A2

FIG. 5    CO OXIDATION OVER $SnO_2/Co_3O_4$ SUPPORTED ON A CORDIERITE MONOLITH

EP 0 359 412 A2

Neu eingereicht / Newly file
Nouvellement déposé

*FlG. 6* PROPANE OXIDATION OVER $SnO_2/Co_3O_4$ SUPPORTED ON A CORDIERITE MONOLITH

EP 0 359 412 A2